# EUROPÄISCHE PATENTSCHRIFT

(11) **EP 3 885 609 B1**
(45) Veröffentlichungstag und Bekanntmachung des Hinweises auf die Patenterteilung: **04.09.2024**
(21) Anmeldenummer: 21168114.3
(22) Anmeldetag: 12.09.2016
(51) Int. Cl.: F16H 7/12

(54) **RIEMENSPANNVORRICHTUNG**
BELT TENSIONING DEVICE
DISPOSITIF DE TENSION DE COURROIE

(30) Priorität: 17.09.2015 DE 102015115750
(43) Veröffentlichungstag der Anmeldung: 29.09.2021
(62) Teilanmeldung aus: 16188379.8
(73) Patentinhaber: Muhr und Bender KG, 57439 Attendorn (DE)
(72) Erfinder: Buchen, Thomas, 57489 Drolshagen (DE); Diblik, Jan, 262 03 Mokrovraty (CZ); Vollmer, Frederik, 57392 Schmallenberg-Dorlar (DE)
(74) Vertreter: Neumann Müller Oberwalleney Patentanwälte PartG mbB

(56) Entgegenhaltungen:
- EP-A1- 2 573 423
- DE-A1- 10 333 876
- DE-A1- 102011 003 113
- DE-A1- 19 729 994
- US-A1- 2004 063 531

## Beschreibung

Die Erfindung betrifft eine Riemenspannvorrichtung für einen Riementrieb. Ein Riementrieb umfasst üblicherweise einen endlosen Riemen und zumindest zwei Riemenscheiben, von denen eine als Antrieb und eine als Abtrieb des Riementriebs fungieren kann. Derartige Riementriebe kommen insbesondere an Verbrennungsmotoren eines Kraftfahrzeugs zum Antreiben von Nebenaggregaten zum Einsatz, wobei eine erste Riemenscheibe auf der Kurbelwelle des Verbrennungsmotors sitzt und den Riemen antreibt. Weitere Riemenscheiben sind den Nebenaggregaten zugeordnet, wie beispielsweise Wasserpumpe, Lichtmaschine oder Klimaanlagenkompressor, und werden vom Riemenantrieb drehend angetrieben. Bei herkömmlichen Riementrieben sind die Nebenaggregate als Verbraucher ausgelegt, das heißt sie werden von der Riemenscheibe der Kurbelwelle über den Riemen angetrieben. Dabei ist zwischen der Kurbelwelle und dem in Umlaufrichtung des Riemens benachbarten Aggregat, in der Regel der Generator, das Lostrum ausgebildet. Um hier eine ausreichende Umschlingung des Riemens um die Riemenscheibe zu gewährleisten, wird der Riemen mittels einer Spannrolle der Riemenspannvorrichtung vorgespannt.

Aus der gattungsgemäßen EP 2 573 423 A1 ist eine Riemenspannvorrichtung für einen Riementrieb der genannten Art bekannt. Die Riemenspannvorrichtung weist einen Grundkörper auf, an dem ein Spannarm schwenkbar gelagert ist. Die Riemenspannvorrichtung ist derart gestaltet, dass die Schwenkachse des Spannarms in montiertem Zustand innerhalb des Außendurchmessers der Riemenscheibe des Aggregats angeordnet ist.

Aus der US 2004/063531 A1 ist ein Riemenspanner mit einem Gehäuse und einem Arm mit einer bajonett-artigen Verbindung bekannt. Hierfür hat das Gehäuse hat einen Schließflansch, und der Arm hat eine Schließlasche, die zusammenwirken. Zwischen einem zentralen Bolzen und der Innennabe ist eine Lageranordnung mit zwei Lagern vorgesehen, mit denen das Gehäuse relativ zum Bolzen drehbar gelagert ist.

Aus der DE 197 29 994 A1 ist ein Riemenspanner mit einem ersten topfförmigen Gehäuseteil bekannt, das über einen bolzenförmigen Tragkörper mit einem ortsfesten Bauteil fest verbunden werden kann. Ein zweites topfförmiges Gehäuseteil ist an dem ersten Gehäuseteil federnd abgestützt und mit der Spannrolle über einen Schwenckörper drehfest verbunden. Am Rand des zweiten Gehäuseteils sind drei am Umfang verteilte Haltevorsprünge angeformt, die über einen Randflansch am ersten Gehäuseteil formschlüssig eingeschnappt sind. Die Haltevorsprünge und die Randflansche sind in montiertem Zustand beabstandet voneinander angeordnet.

Mit den Bestrebungen nach reduziertem Kraftstoffverbrauch bzw. reduzierten CO2-Emissionen geht das Bedürfnis nach Gewichtsreduzierung von Fahrzeugkomponenten einher. So sind auch auf dem Gebiet der Riemenspannvorrichtungen bereits Ansätze zur Reduzierung des Gewichts verfolgt worden.

Aus der DE 10 2014 206 716 A1 ist eine Riemenspannvorrichtung für einen Riementrieb bekannt, die einen Grundkörper, einen relativ hierzu schwenkbaren Spannarm und eine Feder aufweist, die den Spannarm in Umfangsrichtung federnd abstützt. Der Grundkörper und der Spannarm sind zumindest teilweise aus Kunststoff hergestellt, so dass der Riemenspanner insgesamt ein geringes Gewicht aufweist. Es sind Verbindungsmittel zum Verbinden des Spannarms mit dem Grundkörper mittels einer Einsteck- und Drehbewegung vorgesehen.

Aus der DE 197 29 994 A1 ist eine Spannvorrichtung für Treibriemen bekannt, die einen Tragkörper, einen darauf gelagerten Schwenkkörper und eine daran exzentrisch angeordneten Spannrolle umfasst. Es ist ein Federmodul vorgesehen, das im Wesentlichen aus zwei topfförmigen Gehäuseteilen aus Blech besteht, die eine Spannfeder einschließen. Am Rand des inneren Gehäuseteils sind drei am Umfang verteilte Haltevorsprünge angeformt, die über einen Randflansch am äußeren Gehäuseteil formschlüssig eingeschnappt sind. Durch axiales Zusammendrücken der Gehäuseteile werden die Schnappverbindungen über die randseitigen Haltevorsprünge hergestellt. In dieser Form können die Federmodule bevorratet werden.

Aus der DE 10 2011 003 113 A1 ist eine Zugmittelspannvorrichtung mit einer Führungseinrichtung zum Führen eines Zugmittels und mit einem Spanner zum Auslenken und Dämpfen einer Bewegung der Führungseinrichtung. Der Spanner weist ein Gehäuse mit einem Kühlkörper auf. Der Kühlkörper ist an einer Außenumfangsfläche des Gehäuses angeordnet und weist mehrere Kühlrippen auf. Die Kühlrippen sind als längliche Stege mit abgerundeter Oberfläche ausgebildet, die eine Anfasung in ihrer Längserstreckung aufweisen.

Insbesondere bei kompakt bauenden Riemenspannern können hohe Drehschwankungen im Riementrieb, welche durch Wechsel vom Motor- auf Anlasserbetrieb bedingt sind, zu einer hohen Reibleistung und entsprechenden thermischen Belastung des Riemenspanners führen.

Der vorliegenden Erfindung liegt die Aufgabe zugrunde, eine Riemenspannvorrichtung für einen Riementrieb vorzuschlagen, die einfach und kostengünstig herstellbar ist und eine gute Wärmeabfuhr ermöglicht, so dass dieser insbesondere den technischen Anforderungen für den Einsatz in einem Riementrieb mit Startergenerator über eine lange Lebensdauer standhält.

Eine erfindungsgemäße Lösung besteht in einer Riemenspannvorrichtung für einen Riementrieb, umfassend die Merkmale des Anspruchs 1.

Eine nicht erfindungsgemäße Riemenspannvorrichtung für einen Riementrieb kann einen Grundkörper, der mit einem ortsfesten Bauteil fest verbindbar ist; zumindest einen Spannarm, der relativ zum Grundkörper um eine Schwenkachse schwenkbar gelagert ist; eine Spannrolle zum Spannen des Riemens, die an dem Spannarm um eine Drehachse drehbar gelagert ist; Federmittel, mit denen der Spannarm in Umfangsrichtung federnd abgestützt ist; sowie eine Verbindungsanordnung zum Verbinden des Spannarms mit dem Grundkörper umfassen; wobei der Spannarm eine Öffnung für ein Antriebsteil eines Aggregats aufweist, das sich in montiertem Zustand in die Öffnung hinein erstreckt, wobei eine die Öffnung umgebende Wandung des Spannarms mit umfangsverteilten Rippen versehen ist, wobei die Rippen in einem Fußabschnitt eine grö-ßere Dicke aufweisen als in einem Kopfabschnitt.

Für beide Riemenspannvorrichtungen gilt in vorteilhafter Weise, dass diese eine gute Wärmeabfuhr ermöglichen sowie einfach herstellbar sind. Aufgrund der Ausgestaltung der Verbindungsanordnung derart, dass der Spannarm und der Grundkörper mit einer Einsteck- und Drehbewegung miteinander verbindbar sind, ergibt sich eine einfache und kostengünstige Montage. Durch den größeren Kontaktflächenbereich beziehungsweise die Ausgestaltung der Rippen mit variabler Breite über der Höhe wird eine gute Wärmeabfuhr aus den Kontaktstellen ermöglicht, so dass dieser insbesondere den technischen Anforderungen für den Einsatz in einem Riementrieb mit Startergenerator über eine lange Lebensdauer standhält.

Es versteht sich, dass die erfindungsgemäße Lösung auch die Ausgestaltung der Rippen von der nicht erfindungsgemäßen Riemenspannvorrichtung beinhalten kann.

Die Riemenspannvorrichtung kann nach einer ersten Möglichkeit als Einarmspanner gestaltet sein, das heißt genau einen Spannarm aufweisen. In diesem Fall ist der Spannarm in Umfangsrichtung über die Federmittel an dem Grundkörper federnd abgestützt. Nach einer zweiten Möglichkeit kann die Riemenspannvorrichtung auch als Zweiarmspanner gestaltet sein, das heißt genau zwei Spannarme aufweisen. In diesem Fall sind die beiden Spannarme über die Federmittel in Umfangsrichtung gegeneinander abgestützt. Zweiarmspanner kommen in Riementrieben zum Einsatz, bei denen als weiteres Nebenaggregat ein Startergenerator in den Riementrieb integriert ist, das heißt ein Elektromotor, der je nach Betriebszustand als Starter (Anlasser) oder Lichtmaschine (Generator) betrieben werden kann. Es versteht sich, dass im Rahmen der vorliegenden Offenbarung alle auf "einen" oder "den" Spannarm bezogenen Einzelheiten gleichermaßen auch für einen zweiten Spannarm gelten können.

Die Verbindungsanordnung umfasst mehrere dem Grundkörper zugeordnete Verbindungsabschnitte und mehrere dem Spannarm zugeordnete Verbindungsabschnitte, die miteinander zusammenwirken. Dabei sind die Grundkörper-Verbindungsabschnitte und die Spannarm-Verbindungsabschnitte so gestaltet, dass der Spannarm und der Grundkörper durch eine Einsteck- und Drehbewegung miteinander verbindbar sind. Insofern funktioniert die genannte Verbindung nach Art eines Bajonett-Verschlusses, so dass eine einfache Montierbarkeit der Riemenspannvorrichtung gegeben ist. In montiertem Zustand ist jeweils zwischen einem Grundkörper-Verbindungsabschnitt und einem zugehörigen Spannarm-Verbindungsabschnitt ein Kontaktflächenbereich gebildet. Mit Kontaktflächenbereich ist der Bereich der gegenseitigen axialen Abstützung beziehungsweise der gegenseitigen flächigen Überlappung zwischen einem Grundkörper-Verbindungsabschnitt und einem zugehörigen Spannarm-Verbindungsabschnitt gemeint.

Der erste Kontaktflächenbereich zwischen einem ersten Verbindungsabschnitt des Grundkörpers und einem ersten Verbindungsabschnitt des Spannarms ist größer als der zweiter Kontaktflächenbereich zwischen einem zweiten Verbindungsabschnitt des Grundkörpers und einem zweiten Verbindungsabschnitt des Spannarms. Mit anderen Worten ist die Fläche der gegenseitigen Überlappung zwischen den ersten Verbindungsabschnitten des Grundkörpers und des Spannarms größer als die Überlappungsfläche zwischen den zweiten Verbindungsabschnitten. Vorzugsweise ist der erste Kontaktflächenbereich mindestens 10 % größer ist als der zweite Kontaktflächenbereich, insbesondere mindestens 20 %, gegebenenfalls auch mindestens 30 % grö-ßer als der zweite Kontaktflächenbereich.

Es versteht sich, dass die Verbindungsanordnung auch drei und mehr Verbindungsabschnitte zwischen dem Grundkörper und dem Spannarm aufweisen kann, so dass eine entsprechend größere Anzahl an Kontaktflächenbereichen gebildet ist. Diese weiteren Bereiche können hinsichtlich ihrer Größe den ersten Kontaktflächenbereichen oder den zweiten Kontaktflächenbereichen entsprechen oder eine hiervon abweichende Größe haben.

Die Verbindungsanordnung ist vorzugsweise derart gestaltet, dass der Spannarm an den Grundkörper nur in genau einer vorbestimmten Drehposition einsteckbar ist. Auf diese Weise wird die Montage vereinfacht und die Montagezeit verkürzt. Derartige fehlervermeidende Prinzipien werden auch als Poka Yoke bezeichnet. Konkret kann hierfür vorgesehen sein, dass die Verbindungsabschnitte unregelmäßig über den Umfang verteilt sind und/oder unterschiedliche Umfangserstreckungen haben.

Nach einer Ausführungsform ist vorgesehen, dass zwischen zwei in Umfangsrichtung benachbarten Grundkörper-Verbindungsabschnitten jeweils eine Ausnehmung gebildet ist. Die Spannarm-Verbindungsabschnitte sind in Form von zu den Ausnehmungen korrespondierenden radialen Vorsprüngen gestaltet. Der Spannarm ist somit in den Grundkörper in einer Drehposition axial einführbar, in der die radialen Vorsprünge des Spannarms in den Umfangsbereichen der Ausnehmungen des Grundkörpers angeordnet sind. Es versteht sich, dass auch die kinematische Umkehrung der Verbindungsabschnitte möglich ist, das heißt, dass die Ausnehmungen dem Spannarm und die radialen Vorsprünge dem Grundkörper zugeordnet sind.

Nach einer bevorzugten Ausführungsform weist der Grundkörper und/oder der zumindest eine Spannarm eine Öffnung auf, in die sich ein Antriebsteil eines Aggregats in montiertem Zustand hinein erstreckt. Mit anderen Worten ist die Öffnung so gestaltet, dass sich das Antriebsteil in montiertem Zustand in Öffnung hineinerstrecken kann. Das Antriebsteil kann beispielsweise eine Antriebswelle und/oder eine Riemenscheibe des Aggregats sein. Die die Öffnung umgebende Wandung des Spannarms kann zumindest über einen Teilumfang mit Rippen versehen sein. Die Rippen erfüllen insbesondere zwei Funktionen, nämlich zum einen führen sie bei Betrieb entstehende Reibwärme aus der Riemenspannvorrichtung ab, wobei es für eine gute Wärmeabfuhr besonders günstig ist, wenn die Rippen eine variable Dicke über der Höhe haben. Zum anderen unterstützen die Rippen eine gezielte Luftzufuhr in Richtung zum Aggregat, an dem die Riemenspannvorrichtung befestigt ist, um dieses effektiv zu kühlen. Die Rippen können in Bezug auf eine Längsachse der Öffnung gerade, winklig oder bombiert verlaufen. Mit winkligem Verlauf der Rippen sollen alle Formen mit umfasst sein, bei denen die Flanken der Rippen oder Teile davon nicht parallel zur Längsachse verlaufen. Insbesondere können die Rippen auch helixartig oder schaufelartig gestaltet sein.

Nach einer Ausführungsform weisen die Rippen in dem Fußabschnitt eine variable Dicke über der Höhe auf, wobei die Höhe des Fußabschnitts mit variabler Dicke mindestens 10 %, insbesondere mindestens 20 % der Gesamthöhe der Rippe beträgt. Durch den verhältnismäßig langen Abschnitt mit variabler Dicke, die nach radial innen in Richtung zum freien Ende der Rippe hin abnimmt, kann die Wärme des Spannarms von dem Wandungsbereich sehr gut in die Rippen eingeleitet und von dort an die Umgebung abgegeben werden. Insgesamt ist die thermische Belastung des Riemenspanners damit verringert und die Lebensdauer entsprechend erhöht. Die Rippen können im Kopfabschnitt eine konstante Dicke über der Höhe aufweisen, wobei die Höhe des Kopfabschnitts mit konstanter Dicke beispielsweise mindestens 50 % der Gesamthöhe der Rippe betragen kann.

Die Rippen können sich in axialer Richtung, bezogen auf die Schwenkachse, erstrecken oder zumindest eine Steigungskomponente in axialer Richtung aufweisen. Ferner kann vorgesehen sein, dass - im Querschnitt betrachtet - ein zwischen zwei in Umfangsrichtung benachbarten Rippen im Kopfabschnitt gebildeter kleinster Abstand größer ist als ein zwischen zwei benachbarten Rippen im Fußabschnitt gebildeter kleinster Abstand.

Über den Umfang ist eine Mehrzahl von Rippen vorgesehen, wobei die Wandung des Spannarms über einen Umfangsabschnitt von zumindest 60° mit Rippen versehen ist, insbesondere von mindestens 90°. Es ist auch denkbar, dass die Wandung des Spannarms nicht nur einen gerippten Umfangsabschnitt, sondern mehrere Umfangsabschnitte beziehungsweise Segmente aufweist, die mit Rippen versehen sind. Es ist auch denkbar, dass die Innenwandung des Spannarms über den gesamten Innenumfang verrippt ist. Bei dieser Ausrührung kann eine Gesamtzahl von 20 bis 30 Rippen über dem Umfang vorgesehen sein.

Zwischen dem Grundkörper und dem Spannarm ist eine Lageranordnung vorgesehen, mit welcher der Spannarm gegenüber dem Grundkörper um die Schwenkachse drehbar gelagert ist. Für eine kompakte Bauform ist insbesondere vorgesehen, wenn das Verhältnis eines Lagerdurchmessers zur axialen Länge des Riemenspanners (ohne Spannrolle) größer als 1,5, vorzugsweise größer als 2,0 ist. Die Lageranordnung ist vorzugsweise als Gleitlager ausgebildet und umfasst zumindest ein erstes Lagerelement, das dem Grundkörper zugeordnet ist, und zumindest ein zweites Lagerelement, das dem Spannarm zugeordnet ist, wobei zwischen den ersten und zweiten Lagerelementen Reibflächenpaarungen gebildet sind. Insbesondere ist vorgesehen, dass die Lageranordnung ein Axiallager und ein Radiallager umfassen. Axial- und Radiallager können funktional getrennt ausgebildet sein, das heißt das Axiallager dient rein zur Aufnahme von Axialkräften zwischen Spannarm und Grundkörper, während das Radiallager rein zur Aufnahme von Radialkräften dient. Es versteht sich jedoch, dass auch kombinierte Axial-/Radiallager verwendbar sind. Die zwischen den Grundkörper-Verbindungsabschnitten und den Spannarm-Verbindungsabschnitten gebildeten Kontaktflächenbereiche bilden im Einbau- beziehungsweise Betriebszustand des Riemenspanners ein Axiallager der Lageranordnung. In diesem Fall übernehmen die Verbindungsabschnitte zwei Funktionen, nämlich das Verbinden von Grundkörper und Spannarm sowie die axiale Abstützung der beiden Teile gegeneinander. Die ersten und zweiten Lagerelemente können aus unterschiedlichen Materialien hergestellt sein. Insbesondere können eines der Lagerelemente aus einem metallischen Material und das andere der Lagerelemente aus einem Kunststoffmaterial hergestellt sein, wobei die Zuordnung zum Spannarm beziehungsweise Grundkörper beliebig ist.

Nach einer Ausgestaltung sind die Lagerelemente des Grundkörpers segmentartig über dem Umfang angeordnet, beziehungsweise zwischen jeweils zwei in Umfangsrichtung benachbarten Lagerelementen ist eine Ausnehmung zum Einstecken des Spannarms gebildet. Hiermit wird eine axiale Montage vom Spannarm relativ zum Grundkörper ermöglicht. Außerdem können die Lagerelemente als integrale Bestandteile des Grundkörpers mit diesem als eine Baueinheit vorgefertigt werden. Hierfür können die Lagerelemente aus einem reibungsarmen Kunststoffmaterial hergestellt werden, das sich vom Grundwerkstoff des Grundkörpers unterscheidet und an diesem bei der Herstellung eingespritzt wird.

Das Material für den Grundkörper und den Spannarm ist prinzipiell beliebig und kann den Anforderungen entsprechend ausgewählt werden. Beispielsweise können der Spannarm und/oder der Grundkörper aus einem metallischen Material hergestellt werden, beispielsweise einem Aluminiumgussmaterial. Der Spannarm und/oder der Grundkörper können ebenso aus einem Kunststoffmaterial hergestellt werden. Dabei ist es möglich, dass Spannarm und Grundkörper aus demselben oder unterschiedlichen Kunststoffen hergestellt sind, oder, dass eines der Bauteile aus Kunststoff und das andere der Bauteile aus einem metallischen Material hergestellt ist.

Die Herstellung des Spannarms und/oder des Grundkörpers aus Kunststoff soll insbesondere die Möglichkeit mit einschließen, dass der Grundwerkstoff ein Kunststoffmaterial ist, in den weitere Elemente aus einem anderen Werkstoff integriert sein können. Nach einer weiteren Konkretisierung kann vorgesehen sein, dass der Grundkörper und/oder der Spannarm aus mehreren Kunststoffmaterialien hergestellt ist, die unterschiedliche Materialeigenschaften aufweisen können. Die Herstellung kann insbesondere im Wege eines Mehrkomponenten-Spritzgießens erfolgen, bei dem unterschiedliche Kunststoffmaterialien in einem Werkzeug in einem Arbeitsgang hergestellt werden. Für eine gute Wärmeabfuhr aus dem Lagerbereich kann vorgesehen sein, dass dem Grundmaterial Zusatzstoffe zugefügt werden, die eine höhere Wärmeleitfähigkeit haben als die Wärmeleitfähigkeit des Grundmaterials. Als Grundmaterial für den Grundkörper und/oder den Spannarm kann ein faserverstärkter Kunststoff verwendet werden, beispielsweise ein glasfaserverstärkter und/oder kohlefaserverstärkter Kunststoff.

Ferner kann vorgesehen sein, dass das dem Grundkörper zugeordnete Lagerelement aus einem Lagermaterial hergestellt ist, das eine höhere Wärmeleitfähigkeit aufweist als das Grundmaterial des Grundkörpers. Besonders günstig für eine gute Wärmeabfuhr in den Grundkörper ist es, wenn die verwendeten Materialien ausgehend von dem Spannarm-Lagerelement über das Grundkörper-Lagerelement zum Grundmaterial des Grundkörpers eine abfallende Wärmeleitfähigkeit haben.

Bei Verwendung von Kunststoff als Material für den Grundkörper und/oder den Spannarm zumindest ein Verstärkungselement aus einem Metallwerkstoff vorgesehen sein, das von Kunststoff umspritzt ist. Mit wenigstens einem Verstärkungselement ist gemeint, dass im Grundkörper beziehungsweise im Spannarm ein oder mehrere Verstärkungselemente vorgesehen sein können. Sofern vorliegend von einem oder dem Verstärkungselement die Rede ist, gilt dies selbstverständlich auch für jedes weitere Verstärkungselement. Das Verstärkungselement kann beispielsweise in Form einer Buchse gestaltet sein, welche vom Kunststoffmaterial umspritzt ist. Insbesondere kann der Spannarm eine Verstärkungsbuchse beziehungsweise ein Lagerelement aus einem metallischen Werkstoff aufweisen, mit dem der Spannarm auf den Lagermitteln des Grundkörpers drehbar gelagert ist. Ferner kann der Grundkörper Verstärkungsbuchsen aus einem metallischen Werkstoff zur Befestigung an einem ortsfesten Bauteil aufweisen.

Die Federmittel sind vorzugsweise in Form zumindest einer oder genau einer Feder gestaltet, welche sich um die Längsachse herum erstreckt. Vorzugsweise ist die Feder als Schraubenfeder gestaltet, deren Federmittellinie zumindest im Wesentlichen parallel zur Schwenkachse A verläuft, wobei die Schraubenfeder maximal drei volle Windungen, insbesondere maximal zwei volle Windungen, aufweist. Für eine kompakte Bauform der Riemenspannvorrichtung ist es günstig, wenn das Verhältnis von Nenndurchmesser der Schraubenfeder zu axialer Länge der Schraubenfeder, im Einbauzustand, größer als 3,0, insbesondere größer als 4,0, vorzugsweise größer als 5,0 ist. Hiermit wird ermöglicht, dass die Riemenspannvorrichtung stirnseitig an das Aggregat angebracht werden kann, ohne zusätzlichen Bauraum im Umfeld des Aggregats zu beanspruchen. Alternativ können die Federmittel auch als Bügel- oder Torsionsfeder gestaltet sein, welche sich in Umfangsrichtung um weniger als eine volle Windung erstreckt. Auch ist es möglich, dass die Federmittel eine oder mehrere Schraubenfedern umfassen, deren Federmittellinie sich in eingebautem Zustand in Umfangsrichtung um die Schwenkachse A herum erstreckt. Ein Vorteil der genannten Ausführung ist, dass diese aufgrund der spezifischen Größenverhältnisse besonders kompakt baut und bei Verwendung von Kunststoff ein besonders geringes Gewicht aufweist. Insgesamt hat die Riemenspannvorrichtung bei Verwendung von Kunststoffmaterial eine geringe Massenträgheit, so dass die Spannweite der Trumkräfte reduziert wird.

Bevorzugte Ausführungsbeispiele werden nachstehend anhand der Zeichnungsfiguren erläutert. Hierin zeigt
- Figur 1: eine erfindungsgemäße Riemenspannvorrichtung in einer ersten Ausführungsform im Längsschnitt;
- Figur 2: die Riemenspannvorrichtung gemäß Figur 1 in Axialansicht von unten;
- Figur 3: ein Detail der Riemenspannvorrichtung gemäß Figur 1 in vergrößerter Darstellung;
- Figur 4: eine erfindungsgemäße Riemenspannvorrichtung in einer zweiten Ausführungsform im Längsschnitt;
- Figur 5: die Riemenspannvorrichtung gemäß Figur 4 in Axialansicht von unten;
- Figur 6: die Rippenanordnung aus Figur 5 im Detail;
- Figur 7: ein Detail einer erfindungsgemäßen Riemenspannvorrichtung in einer weiteren Ausführungsform mit alternativer Rippengestaltung;
- Figur 8: eine erfindungsgemäße Riemenspannvorrichtung in einer weiteren Ausführungsform in Axialansicht von unten mit einer alternativen Rippengestaltung.

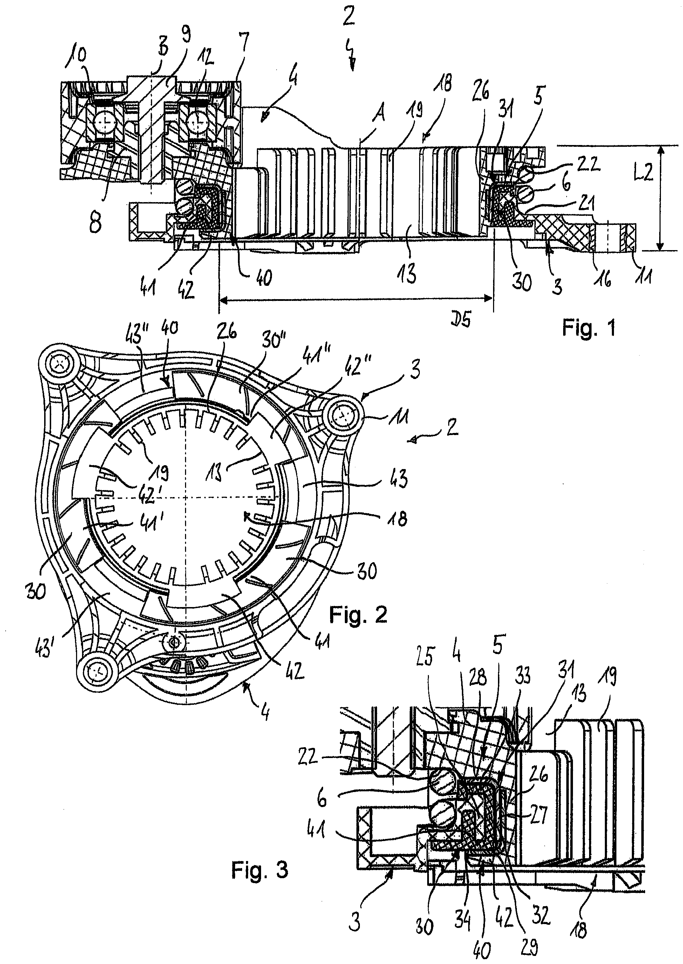

Die Figuren 1 bis 3, welche im Folgenden gemeinsam beschrieben werden, zeigen eine erfindungsgemäße Riemenspannvorrichtung 2 in einer ersten Ausführungsform. Eine Riemenspannvorrichtung 2 dient zum Spannen eines endlosen Riemens in einem Riementrieb (nicht dargestellt). Mit einem Riementrieb kann ein Aggregat über ein Antriebsteil angetrieben werden, beispielsweise über eine Riemenscheibe und eine hiermit drehfest verbundene Antriebswelle. Die Riemenspannvorrichtung 2 umfasst einen Grundkörper 3, der an dem Aggregat (nicht dargestellt) oder einem mit dem Aggregat verbundenen Bauteil befestigt werden kann, einen Spannarm 4, der relativ zum Grundkörper 3 mittels einer Lageranordnung 5 um eine Schwenkachse A schwenkbar gelagert und über eine Feder 6 gegenüber dem Grundkörper 3 in Umfangsrichtung abgestützt ist. Zur Befestigung des Grundkörpers 3 hat dieser drei nach radial außen vorstehende Flanschabschnitte 11 mit Bohrungen, durch welche Schrauben zur Befestigung an dem Aggregat durchgesteckt werden können.

Der Spannarm 4 trägt an einem freien Endabschnitt eine Spannrolle 7, die um eine zur Schwenkachse A parallele Drehachse B drehbar ist. Insofern kann die Spannrolle 7 auch als Rollenträger bezeichnet werden. Die Spannrolle 7 ist an einem Lagerzapfen 8 des Spannarms 4 drehbar gelagert und mittels einer Schraube 9 an diesem befestigt. Axial benachbart zur Spannrolle 7 ist ferner eine Scheibe 10 erkennbar, welche das Lager 12 vor eindringendem Schmutz schützt. Der Spannarm 4 ist über die Lageranordnung 5 axial und radial gegenüber dem Grundkörper 3 um die Schwenkachse A drehbar gelagert und über eine Verbindungsanordnung 13 mit dem Grundkörper 3 verbunden. Der Spannarm 4 liegt zumindest etwa in einer Ebene mit der Lageranordnung 5, so dass der axiale Bauraum gering ist.

Die Feder 6 ist in Form einer Schraubenfeder gestaltet, deren Federmittellinie im Wesentlichen parallel zur Schwenkachse A verläuft. Ein erstes Ende der Schraubenfeder 6 ist nach radial außen gebogen und an einer entsprechenden Anlagefläche des Grundkörpers 3 in Umfangsrichtung abgestützt. Das entgegengesetzte zweite Ende der Schraubenfeder 6 ist ebenfalls nach radial außen abgebogen und stützt sich an einer entsprechenden Anlagefläche des Spannarms 4 in Umfangsrichtung ab. Die Schraubenfeder 6 bewirkt eine Verspannung des Spannarms 4 gegenüber dem Grundkörper 3, so dass der Riemen des Riementriebes vorgespannt wird.

Die Schraubenfeder 6 ist koaxial außerhalb der Lageranordnung 5 für den Spannarm 4 angeordnet. Dabei überdecken sich die Schraubenfeder 6 und die Lagerung 5 zumindest mit Teilabschnitten in axiale Richtung, um den Bauraum in axiale Richtung gering zu halten. Die Schraubenfeder hat einen verhältnismäßig großen Durchmesser in Bezug auf die axiale Länge aufweist. Die Anzahl der Windungen ist größer als eins und kleiner als zwei. Vorzugsweise beträgt die Umfangserstreckung der Schraubenfeder zwischen 540° und 690°. Das Verhältnis von Nenndurchmesser D6 der Schraubenfeder 6 zur axialen Länge L6 beträgt, im Einbauzustand der Schraubenfeder, in welchem die Schraubenfeder axial vorgespannt ist, zwischen 3,0 und 9,0, insbesondere zwischen 5,0 und 8,0. Es versteht sich, dass die genannten Werte nicht einschränkend gemeint sind. Innerhalb der genannten Bereiche sind alle Zwischenbereiche denkbar. Weiter versteht es sich, dass das genannte Verhältnis von Federdurchmesser zu axialer Länge im Einbauzustand unter anderem auch vom Drahtdurchmesser des Federdrahts abhängt. Je größer der Drahtdurchmesser, desto kleiner kann die axiale Länge der Schraubenfeder ausgelegt sein.

Die Riemenspannvorrichtung 2 beziehungsweise der Spannarm 4 eine Durchgangsöffnung 18 aufweisen, die koaxial zur Längsachse A ist. Auf diese Weise lässt sich der Grundkörper 3 einfach an ein Aggregat anschrauben, wobei ein Ende der Antriebswelle gegebenenfalls in die Durchgangsöffnung 18 eintauchen kann. Insgesamt wird somit eine axial kurz bauende Anordnung erreicht. Zumindest in einem Abschnitt der Durchgangsöffnung 18 ist ein kleinster Innendurchmesser D18 der Durchgangsöffnung vorzugsweise größer als ein Außendurchmesser der Antriebswelle (nicht dargestellt) und insbesondere auch größer als ein Außendurchmesser der mit der Antriebswelle verbundenen Riemenscheibe (nicht dargestellt).

Der Grundkörper 3 hat einen Ringabschnitt 25 für die Lagerung des Spannarms 4. An den Ringabschnitt 25 schließt sich radial außen ein Flanschabschnitt an, der als axiale Stützfläche 21 für die Feder 6 dient. Vom Flanschabschnitt stehen mehrere Befestigungsabschnitte 11 nach radial außen ab, die jeweils eine Bohrung zur Befestigung des Grundkörpers 3 an dem Anschlussbauteil aufweisen. Die Befestigungsabschnitte 11 liegen gegenüber dem Flanschabschnitt und gegenüber der Feder 6 auf einem größeren Durchmesser. So lassen sich auf den Grundkörper 3 einwirkende Drehmomente gut abstützen beziehungsweise in das Anschlussbauteil einleiten.

Die Schraubenfeder 6 ist mit axialer Vorspannung zwischen der Stützfläche 21 des Grundkörpers 3 und einer axial gegenüberliegenden Stützfläche 22 des Spannarms 4 eingesetzt. Auf diese Weise wird der Spannarm 4 axial vom Grundkörper 3 weg beaufschlagt wobei sich die beiden genannten Teile über die Verbindungsanordnung 40 axial gegeneinander abstützen. Die Stützfläche 21 für die Feder 6 erstreckt sich über einen Umfangsteilabschnitt des Grundkörpers 3. Dabei liegt zumindest ein Teilabschnitt der Stützfläche 21 in einer Ebene, welche mit der Antriebswelle eine axiale Überdeckung aufweist. Die Stützfläche 21 des Grundkörpers 3 kann in Umfangsrichtung eine Rampenform haben, die an die Steigung der Schraubenfeder 6 angepasst ist.

Die Riemenspannvorrichtung 2 ist so gestaltet, dass die Lagerung 5 des Spannarms 4 am Grundkörper 3 aus Sicht des Aggregats hinter der Riemenebene liegt. Als Riemenebene ist die Ebene definiert, welche durch die Riemenmitte in montiertem Zustand aufgespannt wird. Die Lageranordnung 5 umfasst ein oder mehrere erste Lagerelemente 30, die dem Grundkörper 3 zugeordnet sind, und ein zweites Lagerelement 31, das dem Spannarm 4 zugeordnet ist. Für eine kompakte Bauform der Riemenspannvorrichtung 2 ist es günstig, wenn das Verhältnis des Lagerdurchmessers D5 zur axialen Länge (L2) des Riemenspanners 2 (ohne Spannrolle) größer als 1,5, vorzugsweise größer als 2,0 ist.

Die ersten Lagerelemente 30 sind im Halblängsschnitt betrachtet etwa C-förmig gestaltet und weisen radial innen einen zylindrischen Abschnitt 32 auf, von dem zwei Flanschabschnitte 33, 34 nach radial außen abstehen. Insofern umgreifen die ersten Lagerelemente 30 den Ringabschnitt 25 des Grundkörpers 3 formschlüssig. Dabei bildet der erste Flanschabschnitt 33, welcher dem Spannarm 4 zugewandt ist, eine axiale Lagerfläche, um den Spannarm 4 in einer ersten axialen Richtung abzustützen, während der vom ersten Flanschabschnitt 33 axial beabstandete zweite Flanschabschnitt 34 eine axiale Lagerfläche für den Spannarm 4 in einer entgegengesetzten zweiten axialen Richtung bildet. Die zylindrischen Abschnitte 32 bilden eine radiale Lagerfläche für den Spannarm 4.

Die Lagerelemente 30 und der Grundkörper 3 werden insbesondere im Wege des Mehrkomponenten-Spritzgießen einteilig hergestellt. Dabei bestehen die Lagerelemente 30 aus anderen Kunststoffmaterial als der Grundkörper 3. Das Lagermaterial ist aus einem reibungsarmen Kunststoffmaterial hergestellt, beispielsweise aus einem hochfesten Polyamid mit Polytetrafluorethylen-Anteil (PTFE) mit einer Festigkeit von beispielsweise zwischen 2.000 MPa und 4.000 MPa. Demgegenüber ist der Grundwerkstoff aus einem faserverstärkten Polyamid mit einer Festigkeit von beispielsweise zwischen 15.000 MPa und 22.000 MPa hergestellt. Mit dem Mehrkomponenten-Spritzgießen kann die Baueinheit aus Grundkörper 3 mit Lagerelementen 30 einfach und kostengünstig mit nur einem Werkzeug in einem Arbeitsgang hergestellt werden.

Der Spannarm 4 hat einen Hülsenabschnitt 26, auf den das Lagerelement 31, das in Form einer Lagerbuchse gestaltet ist, aufgepresst ist. Der Spannarm 4 und die Lagerbuchse (Einleger) sind als Hybridteil flächig miteinander verbunden, so dass im Betrieb entstehende Wärme flächig in den Spannarm 4 eingeleitet wird. Die Lagerbuchse 31 ist insbesondere ein Blechumformteil und kann beispielsweise aus Aluminium oder einer Aluminium-Legierung hergestellt werden. Dabei bildet ein Buchsenabschnitt 27 der Lagerbuchse mit den Zylinderabschnitten 32 der ersten Lagerelemente 30 eine Radiallagerung, während ein Flanschabschnitt 28 der Lagerbuchse 31 mit den Flanschabschnitten 33 der ersten Lagerelemente 30 eine Axiallagerung bildet. Dabei sind der Flanschabschnitt 28 der Lagerbuchse 31 und der zugehörige Flanschabschnitt 33 des ersten Lagerelements 30 flächig miteinander in Anlage, ebenso wie die beiden Flanschabschnitte 28, 33 mit den zugehörigen Bauteilen 3, 4 flächig in Anlage sind, so dass eine gute Wärmeableitung aus der Reibstelle ermöglicht wird. Dasselbe gilt auch für einen unteren Flanschabschnitt 29 des Lagerelements 31, die einerseits flächig mit dem Spannarm-Verbindungsabschnitt 42 und andererseits flächig mit dem Flanschabschnitt 43 des Lagerelements 30 in Kontakt ist.

Insbesondere in Figur 2 ist die Verbindungsanordnung 40 erkennbar, mit welcher der Spannarm 4 mit dem Grundkörper 3 verbunden ist. Die Verbindungsanordnung 40 ist nach Art eines Bajonett-Verschlusses gestaltet und umfasst mehrere über den Umfang verteilte erste Verbindungsabschnitte 41, 41', 41", die dem Grundkörper 3 zugeordnet sind, und mehrere hiermit zusammenwirkende zweite Verbindungsabschnitte 42, 42', 42", die dem Spannarm 4 zugeordnet sind. In montiertem Zustand ist jeweils zwischen einem Grundkörper-Verbindungsabschnitt 41, 41', 41" und einem zugehörigen Spannarm-Verbindungsabschnitt 42, 42', 42" ein Kontaktflächenbereich gebildet.

Bei der vorliegenden Ausführungsform ist vorgesehen, wie in Figur 2 erkennbar, dass ein erster Kontaktflächenbereich zwischen einem ersten Verbindungsabschnitt 41 des Grundkörpers 3 und einem ersten Verbindungsabschnitt 42 des Spannarms 4 größer ist als der zweite Kontaktflächenbereich zwischen dem zweiten Grundkörper-Verbindungsabschnitt 41' und dem zweiten Spannarm-Verbindungsabschnitt 42' beziehungsweise größer als der dritte Kontaktflächenbereich zwischen dem dritten Grundkörper-Verbindungsabschnitt 41" und dem dritten Spannarm-Verbindungsabschnitt 42". Dabei kann die Fläche der gegenseitigen Überlappung zwischen den ersten Verbindungsabschnitten 41, 42 des Grundkörpers 3 und des Spannarms 4 um mehr als 20 % größer als die Überlappungsfläche zwischen den zweiten und dritten Verbindungsabschnitten (41 `, 42`; 41 ", 42"). Dies wird dadurch bewerkstelligt, dass der erste Spannarm-Verbindungsabschnitt 42 eine größere Umfangserstreckung aufweist als der zweite und dritte Spannarm-Verbindungsabschnitt 42', 42". Durch Verändern der Kontaktflächengeometrie, insbesondere Vergrößerung der im Betrieb höchstbelasteten Kontaktflächenpaarung zwischen Spannarm-Verbindungsabschnitt und Grundkörper-Verbindungsabschnitt, kann hier die Flächenpressung reduziert werden, was zu einer geringeren Wärmeentwicklung und einem reduzierten Verschleiß führt.

Die Verbindungsabschnitte 41, 41', 41" des Grundkörpers 3 sind durch die Lagerelemente 30, 30', 30" gebildet und sind insbesondere Teile der Flanschabschnitte 34, 34', 34" der Lagerelemente 30, 30', 30". Insofern erfüllen die Lagerelemente 30, 30', 30" zwei Funktionen, nämlich das drehbare Lagern des Spannarms 4 relativ zum Grundkörper 3 sowie das axiale Abstützen der Spannarm-Verbindungsabschnitte 42, 42', 42" und damit das Verbinden der beiden Bauteile 3, 4 miteinander.

Zwischen zwei in Umfangsrichtung benachbarten Grundkörper-Verbindungsabschnitten 41, 41', 41" ist jeweils eine Ausnehmung 43, 43', 43" gebildet ist. Die Spannarm-Verbindungsabschnitte 42, 42', 42" sind in Form von zu den Ausnehmungen 43, 43', 43" korrespondierenden radialen Vorsprüngen gestaltet. Der Spannarm 4 ist somit in den Grundkörper 3 in einer Drehposition axial einführbar, in der die radialen Vorsprünge des Spannarms in den Umfangsbereichen der Ausnehmungen 43, 43', 43" des Grundkörpers 3 angeordnet sind. Hierdurch wird ermöglicht, dass der Spannarm 4 und der Grundkörper 3 durch eine Einsteck- und Drehbewegung miteinander verbunden werden können.

In einer ersten relativen Drehposition, die auch als Bajonettposition bezeichnet werden kann, lassen sich Grundkörper 3 und Spannarm 4 axial ineinander schieben. Sind die Vorsprünge 42, 42', 42" des Spannarms 4 vollständig durch die Ausnehmungen 43, 43', 43" hindurchgeführt, kann der Spannarm 4 relativ zum Grundkörper 3 in eine zweite relative Drehposition verdreht werden. In dieser zweiten Position stützen sich die Vorsprünge 42, 42', 42" des Spannarms 4 an den Grundkörper-Verbindungsabschnitten 41, 41', 41' 'beziehungsweise den Lagerelementen 30, 30', 30" axial ab. Spannarm 4 und Grundkörper 3 sind in dieser Stellung axial miteinander fixiert und über die Feder 6 axial gegeneinander vorgespannt. Um zu verhindern, dass sich die beiden Bauteile 3, 4 wieder ungewollt in die Bajonettposition verdrehen, kann ein Sicherungsstift vorgesehen sein (nicht dargestellt), der als Verdrehanschlag dient.

Die Verbindungsanordnung 40 ist so gestaltet, dass der Spannarm 4 und der Grundkörper 3 nur in der ersten Drehposition (Bajonettposition) ineinander einsteckbar sind. Dies wird dadurch erreicht, dass die Spannarm-Verbindungselemente 41, 41', 41" und die Grundkörper-Verbindungselemente 42, 42', 42" unregelmäßig über den Umfang verteilt angeordnet sind und nur in genau einer relativen Drehstellung miteinander fluchten. Durch diese Ausgestaltung wird die Montage vereinfacht und eine Falschmontage verhindert.

Als Grundmaterial für den Grundkörper 3 und den Spannarm 4 wird vorzugsweise ein hochfester faserverstärkter Kunststoff verwendet, beispielsweise ein glasfaserverstärkter und/oder kohlefaserverstärkter Polyamid. Im Grundkörper 3 und im Spannarm 4 sind ferner Verstärkungselemente aus einem anderen Material vorgesehen. Insbesondere weist der Grundkörper 3 an den Anschlussflanschen 11 Buchsen 16 aus einem Metallwerkstoff auf, die von dem Kunststoff umspritzt sind. Der Spannarm 4 weist ebenfalls eine Verstärkungsbuchse 8 in Form eines Lagerzapfens auf, die von dem Grundwerkstoff umspritzt ist und als Träger für das Lager der Spannrolle 7 dient.

Wie oben bereits erwähnt, ist die Öffnung 18 des Spannarms 4 so gestaltet, dass sich die eine Antriebswelle beziehungsweise Riemenscheibe eines Aggregats (nicht dargestellt) in montiertem Zustand in diese hinein erstrecken kann. Die die Öffnung 18 umgebende Wandung 13 des Spannarms 4 ist mit umfangsverteilten Rippen 19 versehen. Die Rippen 19 erfüllen insbesondere zwei Funktionen, nämlich zum einen führen sie bei Betrieb entstehende Reibwärme aus dem Spannarm 4 ab. Zum anderen unterstützen die Rippen 19 eine gezielte Luftzufuhr in Richtung zum Aggregat, an dem die Riemenspannvorrichtung befestigt ist, um dieses effektiv zu kühlen.

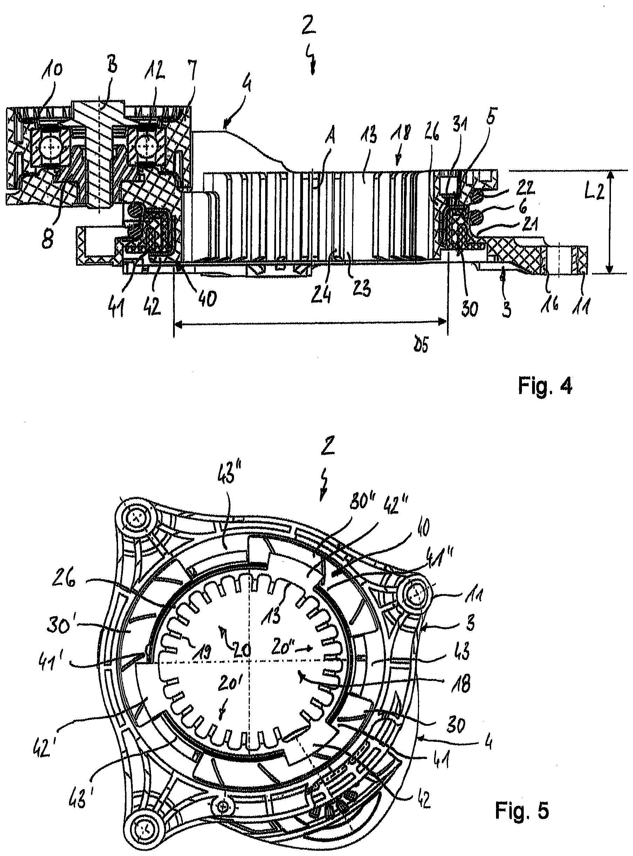

Die Figuren 4 bis 6, die nachstehend gemeinsam beschrieben werden, zeigen eine erfindungsgemäße Riemenspannvorrichtung 2 in einer zweiten Ausführungsform. Diese entspricht weitgehend der Ausführungsform gemäß den Figuren 1 bis 3, so dass hinsichtlich der Gemeinsamkeiten auf die obige Beschreibung Bezug genommen wird. Dabei sind gleiche beziehungsweise einander entsprechende Einzelheiten mit gleichen Bezugszeichen versehen wie in den Figuren 1 bis 3.

Die vorliegende Ausführungsform ist dadurch gekennzeichnet, dass die an der Wandung 13 des Spannarms 4 vorgesehenen Rippen 19 in einem Fußabschnitt 23 eine größere Dicke D23 aufweisen als in einem Kopfabschnitt 24. Durch die verdickten Fußabschnitte 23 kann die Wärme des Spannarms 3 von dem Wandungsbereich sehr gut in die Rippen 19 eingeleitet und von dort an die Umgebung abgegeben werden. Es findet eine Kanalisierung der überschüssigen Energie aus dem Spannarm 4 zur Oberfläche über die möglichst breiten Anbindungsflächen im Grunde der Rippen 19 statt. Dadurch kann die thermische Energie gesammelt und gezielt mittels Konvektion an die Umgebung abgegeben werden. Diese konstruktive Maßnahme kann auch als "Wurzelkonzept" bezeichnet werden. Insgesamt ist die thermische Belastung des Riemenspanners 2 damit verringert und die Lebensdauer entsprechend erhöht.

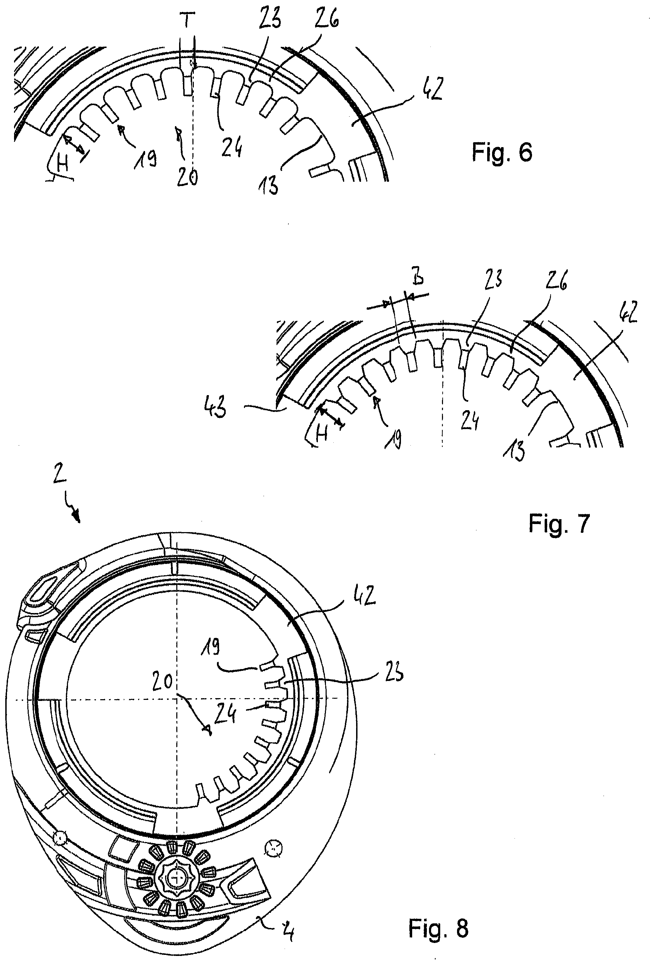

Wie insbesondere in Figur 6 erkennbar, haben die Rippen 19 in dem Fußabschnitt 23 eine variable Dicke T über der Höhe H, was dadurch bewerkstelligt wird, dass die Fußabschnitte im Querschnitt betrachtet gerundet sind. Die Höhe des Fußabschnitts 23 mit variabler Dicke beträgt vorliegend mindestens 20 % der Gesamthöhe H der Rippe 19. Die Rippen 19 haben im Kopfabschnitt 24 eine konstante Dicke über der Höhe, wobei die Höhe des Kopfabschnitts 24 mit konstanter Dicke vorliegend mindestens 50 % der Gesamthöhe H der Rippe 19 beträgt. Die Rippen 19 erstrecken sich in axialer Richtung. Der im Kopfabschnitt 24 zwischen zwei in Umfangsrichtung benachbarten Rippen 19 gebildete kleinste Abstand ist größer als der im Fußabschnitt 23 gebildete kleinste Abstand. So wird eine gute Wärmeabfuhr im Kopfbereich gewährleistet. Bei der vorliegenden Ausführungsform sind die Rippen 19 im Wesentlichen über den gesamten Umfang verteilt. Konkret sind drei Segmente 20 mit jeweils 9 Rippen 19 vorgesehen, wobei zwischen jeweils zwei Rippensegmenten 20 eine Lücke gebildet ist.

Die Figur 7 zeigt eine Riemenspannvorrichtung mit einer abgewandelten Rippenform. Im Unterschied zur Rippenform gemäß der Ausführungsform nach Figur 4 bis 6 sind die Fußabschnitte 23 im Querschnitt pyramidenstupfförmig gestaltet (anstatt gerundet). Im Übrigen entspricht die die Ausführungsform gemäß Figur 7 derjenigen gemäß den Figuren 4 bis 6, so dass bezüglich weiterer Einzelheiten auf die obige Beschreibung Bezug genommen wird. Dabei sind gleiche beziehungsweise einander entsprechende Einzelheiten mit gleichen Bezugszeichen versehen wie in den Figuren 4 bis 6 beziehungsweise den Figuren 1 bis 3.

In Figur 8 ist eine Riemenspannvorrichtung in einer weiteren Ausführungsform mit einer nochmals abgewandelten Rippenanordnung gezeigt. Diese entspricht weitgehend der Ausführungsform gemäß Figur 7, beziehungsweise den Figuren 1 bis 6, so dass hinsichtlich der Gemeinsamkeiten auf die obige Beschreibung Bezug genommen wird. Dabei sind gleiche beziehungsweise einander entsprechende Einzelheiten mit gleichen Bezugszeichen versehen wie in den Figuren 1 bis 6.

Die vorliegende Ausführungsform gemäß Figur 8 ist dadurch gekennzeichnet, dass die Wandung 13 des Spannarms 4 nur in einem Teilumfangsbereich mit Rippen 19 versehen ist beziehungsweise nur ein Rippensegment 20 aufweist. Dieser erstreckt sich über einen Umfangsabschnitt von etwas mehr als 90° um die Längsachse A.

Es versteht sich, dass die Erfindung nicht auf die vorstehend beschriebenen Ausführungsformen beschränkt ist, sondern dass weitere Ausführungsformen denkbar sind.

Insbesondere kann die Ausführungsform gemäß den Figuren 1 bis 3, welche eine Verbindungsanordnung mit ungleich großen Kontaktflächenbereichen hat, auch mit Rippenanordnungen gemäß einer der Ausführungsformen gemäß den Figuren 4 bis 8 versehen sein. Ferner ist es denkbar, dass die Riemenspannvorrichtungen auch mit einer Abdeckscheibe versehen sein kann, die von unten auf die Lageranordnung 5 beziehungsweise die Verbindungsanordnung 13 aufgesetzt wird, um diese vor eindringendem Schmutz zu schützen.

Insgesamt bietet die erfindungsgemäße Riemenspannvorrichtung 2 den Vorteil einer guten Wärmeabfuhr und damit verbunden einer langen Lebensdauer.

### Bezugszeichenliste

- 2: Riemenspannvorrichtung
- 3: Grundkörper
- 4: Spannarm
- 5: Lager
- 6: Feder
- 7: Spannrolle
- 8: Lagerzapfen
- 9: Schraube
- 10: Dichtscheibe
- 11: Anschlussflansch
- 12: Wälzlager
- 13: Wandung
- 14: Axialscheibe
- 15: Hülsenansatz
- 16: Buchse
- 17 18: Durchgangsöffnung
- 19: Rippe
- 20: Segment
- 21: Stützfläche
- 22: Stützfläche
- 23: Fußabschnitt
- 24: Kopfabschnitt
- 25: Ringabschnitt
- 26: Hülsenabschnitt
- 27: Buchsenabschnitt
- 28: Flanschabschnitt
- 29: Flanschabschnitt
- 30: Lagerelement
- 31: Lagerelement
- 32: Zylinderabschnitt
- 33: Flanschabschnitt
- 34: Flanschabschnitt
- 40: Verbindungsanordnung
- 41, 41', 41": Verbindungsabschnitt
- 42, 42', 42": Verbindungsabschnitt
- 43, 43', 43": Ausnehmung

- A: Schwenkachse
- B: Drehachse
- D: Durchmesser
- H: Höhe
- L: Länge
- T: Dicke

## Patentansprüche

1. Riemenspannvorrichtung für einen Riementrieb, umfassend:
einen Grundkörper (3), der mit einem ortsfesten Bauteil fest verbindbar ist;
zumindest einen Spannarm (4), wobei zwischen dem Grundkörper (3) und dem Spannarm (4) eine Lageranordnung (5) vorgesehen ist, mit welcher der Spannarm (4) relativ zum Grundkörper (3) axial und um eine Schwenkachse (A) schwenkbar gelagert ist, wobei der Spannarm (4) eine Öffnung (18) für ein Antriebsteil eines Aggregats aufweist, das sich in montiertem Zustand in die Öffnung hinein erstrecken kann;
eine Spannrolle (7) zum Spannen des Riemens, die an dem Spannarm (4) um eine Drehachse (B) drehbar gelagert ist;
eine Feder (6), mit welcher der Spannarm (4) in Umfangsrichtung federnd abgestützt ist; sowie
eine Verbindungsanordnung (40) zum Verbinden des Spannarms (4) mit dem Grundkörper (3),
**dadurch gekennzeichnet,**
**dass** die Verbindungsanordnung (40) mindestens zwei sich in Umfangsrichtung erstreckende Grundkörper-Verbindungsabschnitte (41, 41', 41") und mindestens zwei sich in Umfangsrichtung erstreckende Spannarm-Verbindungsabschnitte (42, 42', 42") aufweist, die durch eine Einsteck- und Drehbewegung miteinander verbunden sind;
wobei zwischen einem ersten Grundkörper-Verbindungsabschnitt (41) und einem ersten Spannarm-Verbindungsabschnitt (42) ein erster Kontaktflächenbereich gebildet ist, der größer ist als ein zweiter Kontaktflächenbereich, der zwischen einem zweiten Grundkörper-Verbindungsabschnitt (41', 41 ") und einem zweiten Spannarm-Verbindungsabschnitt (42', 42") gebildet ist;
wobei die zwischen den Grundkörper-Verbindungsabschnitten (41, 41', 41") und den Spannarmverbindungsabschnitten (42, 42', 42") gebildeten Kontaktflächenbereiche im montierten Zustand der Riemenspannvorrichtung ein Axiallager der Lageranordnung (5) bilden.

2. Riemenspannvorrichtung nach Anspruch 1,
**dadurch gekennzeichnet, dass** der erste Kontaktflächenbereich mindestens 10 % größer ist als der zweite Kontaktflächenbereich, insbesondere mindestens 20 % größer als der zweite Kontaktflächenbereich.

3. Riemenspannvorrichtung nach einem der Ansprüche 1 oder 2,
**dadurch gekennzeichnet, dass** zwischen zwei in Umfangsrichtung benachbarten Grundkörper-Verbindungsabschnitten (41, 41', 41") jeweils eine Ausnehmung (43, 43', 43") gebildet ist, und
dass die mindestens zwei sich in Umfangsrichtung erstreckenden Spannarm-Verbindungsabschnitte (42, 42', 42") in Form von radialen Vorsprüngen gestaltet sind,
wobei der Spannarm (4) in den Grundkörper (3) in einer Drehposition axial einführbar ist, in der die radialen Vorsprünge des Spannarms (4) im Umfangsbereich der Ausnehmungen (43, 43', 43") des Grundkörpers (3) angeordnet sind.

4. Riemenspannvorrichtung nach einem der Ansprüche 1 bis 3,
**dadurch gekennzeichnet, dass** die Grundkörper-Verbindungsabschnitte (41, 41', 41") und die Spannarm-Verbindungsabschnitte (42, 42', 42") derart gestaltet sind, dass der Spannarm (4) und der Grundkörper (3) nur in genau einer vorbestimmten Drehposition ineinander einsteckbar sind.

5. Riemenspannvorrichtung nach einem der Ansprüche 1 bis 4,
**dadurch gekennzeichnet, dass** eine die Öffnung (18) umgebende Wandung des Spannarms (4) zumindest über einen Teilumfang mit umfangsverteilten Rippen (19) versehen ist.

6. Riemenspannvorrichtung nach Anspruch 5,
**dadurch gekennzeichnet, dass** die Rippen (19) in einem Fußabschnitt (23) eine größere Dicke aufweisen als in einem Kopfabschnitt (24), wobei die Rippen (19) in dem Fußabschnitt (23) eine variable Breite (T) über der Höhe aufweisen, wobei die Höhe des Fußabschnitts (23) mit variabler Dicke mindestens 10 %, insbesondere mindestens 20 % der Gesamthöhe (H) der Rippe (19) beträgt, und,
dass die Rippen (19) in dem Kopfabschnitt (24) eine konstante Dicke über der Höhe aufweisen, wobei die Höhe des Kopfabschnitts mit konstanter Dicke mindestens 50 % der Gesamthöhe (H) der Rippe (19) beträgt, wobei ein zwischen zwei benachbarten Rippen (19) im Kopfabschnitt (24) gebildeter kleinster Abstand größer ist als ein zwischen zwei benachbarten Rippen (19) im Fußabschnitt (23) gebildeter kleinster Abstand.

7. Riemenspannvorrichtung nach Anspruch 3,
**dadurch gekennzeichnet, dass** die Lageranordnung (5) dem Grundkörper (3) zugeordnete Lagerelemente (30, 30', 30"), die segmentartig über dem Umfang angeordnet sind, und zumindest ein dem Spannarm (4) zugeordnetes Lagerelement (31) aufweist, wobei jeweils zwischen zwei in Umfangsrichtung benachbarten Lagerelementen (30, 30', 30") des Grundkörpers (3) die Ausnehmungen (43, 43', 43") gebildet sind, in welche die radialen Vorsprünge des Spannarms (4) einführbar sind.

8. Riemenspannvorrichtung nach Anspruch 7,
**dadurch gekennzeichnet, dass** das Verhältnis eines Lagerdurchmessers der Lageranordnung (5) zur axialen Länge des Riemenspanners (ohne Spannrolle) größer als 1,5 ist.

9. Riemenspannvorrichtung nach Anspruch 7 oder 8,
**dadurch gekennzeichnet, dass** die Lagerelemente (30, 30', 30") des Grundkörpers (3) aus einem Kunststoffmaterial hergestellt sind, und das zumindest eine Lagerelement (31) des Spannarms aus einem metallischen Material ist.

10. Riemenspannvorrichtung nach einem der Ansprüche 1 bis 9,
**dadurch gekennzeichnet, dass** der Grundkörper (3) und der Spannarm (4) aus unterschiedlichen Materialien hergestellt sind, wobei zumindest eines der beiden Teile Grundkörper (3) und Spannarm (4) zumindest teilweise aus Kunststoff hergestellt ist, insbesondere aus einem glasfaserverstärkten Kunststoff.

11. Riemenspannvorrichtung nach einem der Ansprüche 7 bis 10,
**dadurch gekennzeichnet, dass** die Lagerelemente (30, 30', 30") des Grundkörpers (3) aus einem Lagermaterial hergestellt sind, das eine höhere Wärmeleitfähigkeit aufweist als das Grundmaterial des Grundkörpers (3).

12. Riemenspannvorrichtung nach einem der Ansprüche 1 bis 11,
**dadurch gekennzeichnet, dass** die Feder (6) in Form einer Schraubenfeder gestaltet sind, deren Federachse im Einbauzustand zumindest im Wesentlichen parallel zur Schwenkachse (A) verläuft, wobei die Schraubenfeder maximal drei volle Windungen aufweist, wobei das Verhältnis von Nenndurchmesser (D6) der Schraubenfeder (6) zu axialer Länge (L6) der Schraubenfeder im Einbauzustand größer als 3,0 ist.

## Claims

1. Belt tensioning device for a belt drive, comprising:
a base member (3) which is firmly connectable to a stationary component;
at least one tensioning arm (4), wherein a bearing assembly (5) is provided between the base member (3) and the tensioning arm (4), with which bearing assembly (5) the tensioning arm (4) is supported axially and pivotably about a pivot axis (A) relative to the base member (3), wherein the tensioning arm (4) has an opening (18) for a drive part of a unit, which can extend into the opening in a mounted condition;
a tensioning roller (7) for tensioning the belt, which is mounted on the tensioning arm (4) so as to be rotatable about an axis of rotation (B);
a spring (6) with which the tensioning arm (4) is resiliently supported in circumferential direction; and
a connecting assembly (40) for connecting the tensioning arm (4) to the base member (3),
**characterised in**
**that** the connecting assembly (40) has at least two base member connecting portions (41, 41', 41") extending in the circumferential direction and at least two tensioning arm connecting portions (42, 42', 42") extending in the circumferential direction, which are connected to one another by an insertion and rotation movement;
wherein a first contact face region is formed between a first base member connecting portion (41) and a first tensioning arm connecting section (42), which is larger than a second contact face region formed between a second base member connecting portion (41', 41") and a second tensioning arm connecting portion (42', 42");
wherein the contact face regions formed between the base member connecting portions (41, 41', 41") and the tensioning arm connecting portions (42, 42', 42") form an axial bearing of the bearing assembly (5) in the assembled state of the belt tensioning device.

2. Belt tensioning device according to claim 1,
**characterised in that** the first contact face region is at least 10 % larger than the second contact face region, in particular at least 20 % larger than the second contact face region.

3. Belt tensioning device according to one of claims 1 or 2,
**characterised in that** a recess (43, 43', 43") is formed respectively between two base member connecting portions (41, 41', 41") adjacent in circumferential direction, and
that the at least two tensioning arm connecting portions (42, 42', 42") extending in the circumferential direction are designed in the form of radial projections,
wherein the tensioning arm (4) can be inserted axially into the base member (3) in a rotational position in which the radial projections of the tensioning arm (4) are arranged in a circumferential region of the recesses (43, 43', 43") of the base member (3).

4. Belt tensioning device according to any one of claims 1 to 3, **characterised in that** the base member connecting portions (41, 41', 41") and the tensioning arm connecting portions (42, 42', 42") are designed in such a way that the tensioning arm (4) and the base member (3) can only be inserted into one another in exactly one predetermined rotational position.

5. Belt tensioning device according to any one of claims 1 to 4, **characterised in that** a wall of the tensioning arm (4) surrounding the opening (18) is provided with circumferentially distributed ribs (19) at least over a partial circumference.

6. Belt tensioning device according to claim 5,
**characterised in that** the ribs (19) have a greater thickness in a foot portion (23) than in a head portion (24), the ribs (19) in the foot portion (23) having a variable width (T) over the height,
wherein the height of the foot portion (23) with variable thickness is at least 10 %, in particular at least 20 % of the total height (H) of the rib (19), and,
**in that** the ribs (19) in the head portion (24) have a constant thickness over the height, the height of the constant thickness head portion being at least 50% of the total height (H) of the rib (19), wherein a smallest distance formed between two neighbouring ribs (19) in the head portion (24) is greater than a smallest distance formed between two neighbouring ribs (19) in the foot portion (23).

7. Belt tensioning device according to claim 3,
**characterised in that** the bearing assembly (5) has bearing elements (30, 30', 30") assigned to the base member (3), which are arranged in segments over the circumference, and at least one bearing element (31) assigned to the tensioning arm (4), wherein the recesses (43, 43', 43"), into which the radial projections of the tensioning arm (4) are insertable, are formed respectively between two bearing elements (30, 30', 30") of the base member (3) adjacent in circumferential direction.

8. Belt tensioning device according to claim 7,
**characterised in that** the ratio of a bearing diameter of the bearing assembly (5) to the axial length of the belt tensioner (without tensioning roller) is greater than 1.5.

9. Belt tensioning device according to claim 7 or 8,
**characterised in that** the bearing elements (30, 30', 30") of the base member (3) are made of a plastic material, and the at least one bearing element (31) of the tensioning arm is made of a metallic material.

10. Belt tensioning device according to any one of claims 1 to 9,
**characterised in that** the base member (3) and the tensioning arm (4) are made of different materials, at least one of the two parts, the base member (3) and the tensioning arm (4), being at least partially made of plastic, in particular of a glass-fibre reinforced plastic.

11. Belt tensioning device according to any one of claims 7 to 10,
**characterised in that** the bearing elements (30, 30', 30") of the base member (3) are made of a bearing material which has a higher thermal conductivity than the base material of the base member (3).

12. Belt tensioning device according to any one of claims 1 to 11,
**characterised in that** the spring (6) is designed in the form of a helical spring, the spring axis of which extends at least substantially parallel to the pivot axis (A) in the installed state, with the helical spring having a maximum of three full windings, with the ratio of the nominal diameter (D6) of the helical spring (6) to the axial length (L6) of the helical spring in the installed state being greater than 3.0.

## Revendications

1. Dispositif de tension de courroie pour un entraînement par courroie, comprenant :
un corps de base (3) qui peut être fixé à un élément fixe ;
au moins un bras tendeur (4), un agencement de palier (5) étant prévu entre le corps de base (3) et le bras tendeur (4), avec lequel le bras tendeur (4) est logé axialement par rapport au corps de base (3) et est logé de manière à pouvoir pivoter autour d'un axe de pivotement (A), le bras tendeur (4) présentant une ouverture (18) pour une partie d'entraînement d'un agrégat, qui peut s'étendre dans l'ouverture à l'état monté ;
un galet tendeur (7) pour tendre la courroie, qui est monté sur le bras tendeur (4) de manière à pouvoir tourner autour d'un axe de rotation (B) ;
un ressort (6), avec lequel le bras tendeur (4) est soutenu élastiquement dans la direction périphérique ; ainsi que
un agencement de liaison (40) pour relier le bras tendeur (4) au corps de base (3),
**caractérisé en ce**
**que** l'agencement de liaison (40) présente au moins deux sections de liaison de corps de base (41, 41', 41") s'étendant dans la direction circonférentielle et au moins deux sections de liaison de bras tendeur (42, 42', 42") s'étendant dans la direction circonférentielle, qui sont reliées entre elles par un mouvement d'insertion et de rotation ;
dans lequel une première zone de face de contact est formée entre une première section de liaison de corps de base (41) et une première section de liaison de bras tendeur (42), qui est plus grande qu'une deuxième zone de face de contact formée entre une deuxième section de liaison de corps de base (41', 41") et une deuxième section de liaison de bras tendeur (42', 42") ;
dans lequel les zones de face de contact formées entre les sections de liaison de corps de base (41, 41', 41") et les sections de liaison de bras tendeur (42, 42', 42") formant un palier axial de l'agencement de palier (5) à l'état monté du tendeur de courroie.

2. Dispositif de tension de courroie selon la revendication 1,
**caractérisé en ce que** la première zone de face de contact est au moins 10 % plus grande que la deuxième zone de face de contact, en particulier au moins 20 % plus grande que la deuxième zone de face de contact.

3. Dispositif de tension de courroie selon l'une des revendications 1 ou 2,
**caractérisé en ce qu'**un évidement (43, 43', 43") est respectivement formé entre deux sections de liaison de corps de base (41, 41', 41") voisines dans la direction périphérique, et
**en ce que** les au moins deux sections de liaison de bras tendeur (42, 42', 42") s'étendant dans la direction circonférentielle sont configurées sous la forme de saillies radiales,
le bras tendeur (4) pouvant être introduit axialement dans le corps de base (3) dans une position de rotation dans laquelle les saillies radiales du bras tendeur (4) sont disposées dans la zone périphérique des évidements (43, 43', 43") du corps de base (3).

4. Dispositif de tension de courroie selon l'une quelconque des revendications 1 à 3,
**caractérisé en ce que** les sections de liaison de corps de base (41, 41', 41") et les sections de liaison de bras tendeur (42, 42', 42") sont conçues de telle sorte que le bras tendeur (4) et le corps de base (3) ne peuvent être emboîtés l'un dans l'autre que dans exactement une position de rotation prédéterminée.

5. Dispositif de tension de courroie selon l'une quelconque des revendications 1 à 4,
**caractérisé en ce qu'**une paroi du bras tendeur (4) entourant l'ouverture (18) est pourvue, au moins sur une partie de sa circonférence, de nervures (19) réparties sur la circonférence.

6. Dispositif de tension de courroie selon la revendication 5,
**caractérisé en ce que** les nervures (19) ont une épaisseur plus grande dans une partie de pied (23) que dans une partie de tête (24), les nervures (19) ayant une largeur variable (T) sur la hauteur dans la partie de pied (23),
dans lequel la hauteur de la partie de pied (23) d'épaisseur variable est d'au moins 10 %, en particulier d'au moins 20 %, de la hauteur totale (H) de la nervure (19), et,
**en ce que** les nervures (19) dans la section de tête (24) ont une épaisseur constante sur la hauteur, la hauteur de la section de tête d'épaisseur constante étant d'au moins 50 % de la hauteur totale (H) de la nervure (19), une distance la plus petite formée entre deux nervures adjacentes (19) dans la section de tête (24) étant supérieure à une distance la plus petite formée entre deux nervures adjacentes (19) dans la section de pied (23).

7. Dispositif de tension de courroie selon la revendication 3,
**caractérisé en ce que** l'agencement de palier (5) présente des éléments de palier (30, 30', 30") associés au corps de base (3), qui sont disposés à la manière de segments sur la périphérie, et au moins un élément de palier (31) associé au bras tendeur (4), les évidements (43, 43', 43"), dans lesquels les saillies radiales du bras tendeur (4) peuvent être introduites, étant formés respectivement entre deux éléments de palier (30, 30', 30") du corps de base (3) voisins dans la direction périphérique.

8. Dispositif de tension de courroie selon la revendication 7,
**caractérisé en ce que** le rapport entre un diamètre de palier de l'ensemble de palier (5) et la longueur axiale du tendeur de courroie (sans galet tendeur) est supérieur à 1,5.

9. Dispositif de tension de courroie selon la revendication 7 ou 8, **caractérisé en ce que** les éléments de palier (30, 30', 30") du corps de base (3) sont fabriqués en un matériau plastique, et le au moins un élément de palier (31) du bras tendeur est en un matériau métallique.

10. Dispositif de tension de courroie selon l'une quelconque des revendications 1 à 9,
**caractérisé en ce que** le corps de base (3) et le bras tendeur (4) sont fabriqués dans des matériaux différents, au moins l'une des deux parties, le corps de base (3) et le bras tendeur (4), étant fabriquée au moins partiellement en matière plastique, en particulier en une matière plastique renforcée par des fibres de verre.

11. Dispositif de tension de courroie selon l'une quelconque des revendications 7 à 10,
**caractérisé en ce que** les éléments de palier (30, 30', 30") du corps de base (3) sont fabriqués dans un matériau de palier qui présente une conductivité thermique plus élevée que le matériau de base du corps de base (3).

12. Dispositif de tension de courroie selon l'une quelconque des revendications 1 à 11,
**caractérisé en ce que** les ressorts (6) sont conçus sous la forme d'un ressort hélicoïdal dont l'axe de ressort s'étend, à l'état monté, au moins sensiblement parallèlement à l'axe de pivotement (A), le ressort hélicoïdal présentant au maximum trois spires complètes, le rapport du diamètre nominal (D6) du ressort hélicoïdal (6) à la longueur axiale (L6) du ressort hélicoïdal à l'état monté étant supérieur à 3,0.
